# EUROPEAN PATENT APPLICATION

(11) **EP 4 815 135 A1**
(43) Date of publication of application: **30.09.2026**
(21) Application number: 26156660.8
(22) Date of filing: 05.02.2026
(51) Int. Cl.: H01M 50/209, H01M 50/244, H01M 50/291

(54) **MODULE HOUSING AND BATTERY MODULE INCLUDING THE SAME**

(30) Priority: 25.03.2025 KR 20250038031
(71) Applicant: SAMSUNG SDI CO., LTD., Yongin-si, Gyeonggi-do 17084 (KR)
(72) Inventor: SEOK, Shang Chul, 16678 Suwon-si, Gyeonggi-do (KR)
(74) Representative: Gulde & Partner

(57) **Abstract**

A module housing and a battery module are disclosed. A module housing includes a housing body, a first reinforcement frame extending in a first direction inside the housing body and including a first surface and a second surface that are opposite each other, a second reinforcement frame facing the first surface of the first reinforcement frame and extending in a second direction intersecting the first direction, a third reinforcement frame facing the second surface of the first reinforcement frame and extending in the second direction, and a connecting member to connect the first reinforcement frame, the second reinforcement frame, and the third reinforcement frame.

## Description

### BACKGROUND

### 1. Field

Aspects of embodiments of the present disclosure relate to a module housing and a battery module including the same.

### 2. Description of the Related Art

Generally, secondary batteries are batteries that can be charged and discharged, unlike primary batteries that cannot be recharged. Low-capacity secondary batteries may be used in portable small electronic devices, such as smartphones, feature phones, laptop computers, digital cameras, and camcorders, while high-capacity secondary batteries are widely used as power sources for motor driving in hybrid vehicles, electric vehicles, and the like, and batteries for power storage, or the like. These secondary batteries include an electrode assembly composed of a positive electrode and a negative electrode, a case which accommodates the electrode assembly, and an electrode terminal connected to the electrode assembly.

The secondary battery may be used as a battery pack formed of a plurality of unit battery cells connected in series and/or parallel to provide high energy density. The battery pack may be formed by interconnecting electrode terminals of a plurality of unit batteries to meet a desired amount of power, and to implement a high-power secondary battery of, for example, an electric vehicle.

The above-described information disclosed in the technology that forms the background of the present disclosure is provided to facilitate understanding of the background of the present disclosure, and may include information that does not constitute the related art.

### SUMMARY

According to an aspect of embodiments of the present disclosure, a module housing and a battery module capable of increasing structural rigidity are provided.

The above and other aspects and features of the present disclosure will be described in or will be apparent from the following description of some embodiments of the present disclosure.

According to one or more embodiments of the present disclosure, a module housing includes a housing body, a first reinforcement frame extending in a first direction inside the housing body and including a first surface and a second surface that are opposite each other, a second reinforcement frame facing the first surface of the first reinforcement frame and extending in a second direction intersecting the first direction, a third reinforcement frame facing the second surface of the first reinforcement frame and extending in the second direction, and a connecting member to connect the first reinforcement frame, the second reinforcement frame, and the third reinforcement frame.

The second reinforcement frame and the third reinforcement frame may face each other in the second direction.

This configuration creates an integrated, cross-braced internal skeleton. When a load is applied to the housing, it is not concentrated on a single wall but is efficiently distributed across the interconnected network of frames. This results in a substantial increase in the overall torsional and bending rigidity of the module housing. It protects the accommodated battery cells from mechanical stress under impact or vibration. This enhanced stiffness can be achieved without requiring excessively thick outer walls, offering the potential for significant weight savings, a critical benefit for applications like electric vehicles.

The connecting member may include a first connecting body passing through the first reinforcement frame, a second connecting body extending from the first connecting body and inserted in the second reinforcement frame, and a third connecting body extending from the first connecting body and inserted in the third reinforcement frame.

The connecting member is defined by a first connecting body passing through the first frame, with second and third connecting bodies extending from it and inserted into the second and third frames, respectively. This creates a robust multi-axis mechanical interlock. The first body resists shear forces, while the second and third bodies prevent the frames from pulling apart along the second direction. This provides a highly durable connection that is superior to simple welding, ensuring the frames cannot become disassembled under severe vibration or shock. This guarantees the long-term structural integrity of the internal support system.

The second connecting body and the third connecting body may be parallel to the second direction. This ensures the connecting bodies are perfectly aligned with the longitudinal axis of the reinforcement frames into which they are inserted. This alignment maximizes the contact surface area between the connecting bodies and their respective frames, leading to a more stable fit and efficient force transmission. It also simplifies the overall geometry, aiding in both manufacturing and stress distribution analysis.

The second connecting body and the third connecting body may extend in opposite directions from the first connecting body. This creates a balanced, T-shaped or cross-shaped structure for the connecting member at the intersection point. Forces are transmitted symmetrically through the connection, preventing the creation of unwanted rotational moments. This symmetrical design improves structural stability and ensures predictable load distribution. It also simplifies the manufacturing of the connecting member, which can be formed as a single, balanced component.

The first connecting body may include a plurality of first connecting bodies arranged in a third direction intersecting the first direction and the second direction.

The connecting member may further include a first connecting pin inserted in the second reinforcement frame and passing through the second connecting body, and a second connecting pin inserted in the third reinforcement frame and passing through the third connecting body. This orients the pins perpendicular to the main axes of the frames and connecting bodies. This orientation is optimal for resisting pull-out forces and simplifies the assembly process, as all pins can be inserted from a single, consistent direction (e.g., from the top down) across multiple connection points.

The first connecting pin and the second connecting pin may be parallel to a third direction intersecting the first direction and the second direction. This orients the pins perpendicular to the main axes of the frames and connecting bodies. This orientation is optimal for resisting pull-out forces and simplifies the assembly process, as all pins can be inserted from a single, consistent direction (e.g., from the top down) across multiple connection points.

The connecting member may further include an alignment protrusion protruding from at least one of the first connecting body, the second connecting body, and the third connecting body. The protrusion acts as a mechanical guide or "key" that interfaces with a corresponding groove during assembly, ensuring the correct rotational orientation of the connecting bodies. This feature facilitates a "fool-proof" (poka-yoke) assembly, increasing manufacturing speed, reducing the likelihood of errors, and improving final product quality. By ensuring correct alignment, it also guarantees that the holes for the connecting pins are perfectly aligned, making that assembly step faster and more reliable.

The housing body may include a bottom plate, a first end plate and a second end plate that extend from the bottom plate and face each other in the second direction, and a first side plate and a second side plate that extend from the bottom plate and face each other in the first direction. This defines a modular construction method for the housing body. This construction is highly amenable to cost-effective mass-production techniques such as sheet metal stamping, press forming, and bending, as opposed to more complex and expensive methods like casting.

The module housing may further include a first fixing member configured to fix the first reinforcement frame to the housing body. This member mechanically couples the internal reinforcement skeleton to the external housing skin. This creates a composite structure where the frame and housing act in unison, significantly increasing overall stiffness. It prevents rattling or relative movement and provides a defined load path from the internal structure to the external body.

The first reinforcement frame may be seated on the bottom plate, and the first fixing member may include one or more first bottom fixing pins to fix the first reinforcement frame to the bottom plate. This specifically secures the base of the central reinforcement frame to the floor of the housing. This provides a solid and stable foundation for the entire internal structure, preventing it from lifting or shifting. It also creates a reliable thermal path for heat to conduct from the frame to the bottom plate, which can act as a heat sink.

The first bottom fixing pin may include a first bottom rod passing through the bottom plate and inserted in the first reinforcement frame, and a first bottom head connected to the first bottom rod and in contact with the bottom plate. The rod passes through the bottom plate and into the frame, while the head presses against the outer surface of the bottom plate. This creates a strong clamping force, pulling the frame tightly downwards. This creates a high-strength, pre-loaded connection that is highly resistant to vibration. The clamping action eliminates micro-gaps, ensuring maximum structural coupling and enhancing thermal conductivity between the frame and the bottom plate.

The module housing may further include a second fixing member to fix the second reinforcement frame to the housing body, and a third fixing member to fix the third reinforcement frame to the housing body. This extends the mechanical coupling to the entire internal frame assembly. By ensuring all three frames are rigidly integrated with the external housing, the overall module rigidity is maximized, far beyond what would be achieved by fixing only the central frame.

The second reinforcement frame may be seated on the bottom plate, and the second fixing member may include one or more second bottom fixing pins to fix the second reinforcement frame to the bottom plate. This secures the base of the second reinforcement frame to the housing floor. This complements the fixing of the first and third frames, creating a stable, multi-point foundation for the entire cross-braced structure and preventing any part of it from lifting or moving relative to the housing base.

An end portion of the second reinforcement frame may be in contact with the first end plate, and the second fixing member may further include one or more first end fixing pins to fix the second reinforcement frame to the first end plate. This provides a second axis of fastening for the frame, securing it not only to the bottom but also to a vertical wall of the housing. This creates a much more rigid connection by preventing the frame from rocking or pivoting on its bottom fasteners. It dramatically increases resistance to torsional forces applied to the module, as the frame is now locked in two perpendicular planes.

The first reinforcement frame, the second reinforcement frame, and the third reinforcement frame may be extrusion molded.

The first reinforcement frame, the second reinforcement frame, and the third reinforcement frame may include aluminum.

The module housing may further include a housing cover coupled to the housing body and enclosing the housing body.

According to one or more embodiments of the present disclosure, a battery module includes a plurality of secondary batteries, and a module housing accommodating the plurality of secondary batteries, wherein the module housing includes a housing body, a first reinforcement frame extending in a first direction inside the housing body and including a first surface and a second surface that are opposite each other, a second reinforcement frame facing the first surface of the first reinforcement frame and extending in a second direction intersecting the first direction, a third reinforcement frame facing the second surface of the first reinforcement frame and extending in the second direction, and a connecting member to connect the first reinforcement frame, the second reinforcement frame, and the third reinforcement frame. The specific housing structure is utilized to accommodate, partition, and protect the battery cells. This results in a complete, functional battery module with superior structural integrity and safety. The robust, partitioned housing protects the enclosed batteries from mechanical damage and can improve thermal management by creating defined channels for coolant or airflow, and by ensuring a solid thermal path to the housing exterior. The module housing may be designed according to a before mentioned module housing. The statements concerning the module housing also apply to the battery modules module housing.

### BRIEF DESCRIPTION OF THE DRAWINGS

The drawings included with this specification illustrate some embodiments of the present disclosure, and further describe aspects and features of the present disclosure together with the detailed description of the present disclosure. However, the present disclosure is not to be construed as being limited to the drawings.
FIG. 1 is an exploded perspective view schematically illustrating a configuration of a battery module according to an embodiment of the present disclosure;
FIG. 2 is a perspective view schematically illustrating a configuration of a secondary battery according to an embodiment of the present disclosure;
FIG. 3 is an exploded perspective view schematically illustrating a configuration of a module housing according to an embodiment of the present disclosure;
FIG. 4 is a cross-sectional view schematically illustrating a configuration of a first reinforcement frame according to an embodiment of the present disclosure;
FIG. 5 is an enlarged cross-sectional view schematically illustrating a configuration of a first bottom fixing pin according to an embodiment of the present disclosure;
FIG. 6 is a cross-sectional view schematically illustrating a configuration of a second reinforcement frame according to an embodiment of the present disclosure;
FIG. 7 is a cross-sectional view schematically illustrating a configuration of a third reinforcement frame according to an embodiment of the present disclosure;
FIG. 8 is a perspective view schematically illustrating a configuration of a connecting member according to an embodiment of the present disclosure;
FIG. 9 is an exploded perspective view schematically illustrating a configuration of a connecting member according to an embodiment of the present disclosure;
FIG. 10 is a view schematically illustrating a configuration of an alignment protrusion according to an embodiment of the present disclosure;
FIG. 11 is a perspective view schematically illustrating a configuration of a connecting member according to another embodiment of the present disclosure;
FIG. 12 is an exploded perspective view schematically illustrating a configuration of the connecting member according to another embodiment of the present disclosure; and
FIG. 13 is a cross-sectional view schematically illustrating a configuration of the connecting member according to another embodiment of the present disclosure.

### DETAILED DESCRIPTION

Herein, some example embodiments of the present disclosure will be described in further detail with reference to the attached drawings. Terms or words used in this specification and claims are not to be interpreted as being limited to ordinary or dictionary meanings and are to be interpreted as having meanings and concepts consistent with the technical idea of this disclosure based on the principle that the inventor can properly define the concept of the term in order to describe his or her disclosure in the best way. Accordingly, it is to be understood that the embodiments described herein, and the configurations illustrated in the drawings are only some of example embodiments of the disclosure and do not necessarily represent all of the technical ideas of the disclosure, and that there may be various equivalents and modifications that may replace them at the time of filing.

Further, when used herein, the terms "comprise" or "include" and/or "comprising" or "including" specify the presence of the mentioned shapes, numbers, steps, operations, members, elements, and/or groups thereof and are not intended to exclude the presence or addition of one or more other shapes, numbers, operations, members, elements, and/or groups thereof.

In addition, to facilitate understanding of the disclosure, the attached drawings may not be drawn to actual scale, and the dimensions of some components may be exaggerated. In addition, the same reference numbers may be assigned to the same components in different embodiments.

The statement that two objects for comparison are "equal" or "the same" means equal, the same, or substantially the same. Therefore, equal, the same, or substantially the same may include deviations that are considered low in the art, for example, deviations of less than 5%. Additionally, uniformity of a parameter over a given region may mean uniformity from an average perspective.

Although "first," "second," and the like may be used to describe various components, the components are not limited by these terms. These terms are used to distinguish one component from another, and unless otherwise specifically stated, it is to be understood that a first component may also be a second component.

Throughout the specification, unless otherwise specifically stated, each element may be singular or plural.

When an arbitrary configuration is placed "on (or under)" a component or "above (or below)" a component, it can mean not only that the arbitrary configuration is placed in contact with the top (or bottom) of the component, but also that other configurations can be interposed between the component and the arbitrary configuration placed on (or under) the component.

In addition, when a component is described as being "on," "connected to," or "coupled to" another component, the above components may be directly connected or coupled to each other, but it is to be understood that one or more other components may be "interposed" between each component, or each component may be "connected," "coupled," or "linked" through another component.

As used herein, the term "and/or" includes any and all combinations of one or more of the associated listed items. Further, the use of "may" when describing embodiments of the present disclosure relates to "one or more embodiments of the present disclosure." Expressions such as "one or more" and "at least one" before the list of elements modify the entire list of elements and do not modify individual elements in the list.

Throughout the specification, "A and/or B" means A, B, or A and B unless otherwise stated to the contrary. That is, "and/or" includes any or all combinations of a plurality of listed items. When "C to D" is stated, it means greater than or equal to C and less than or equal to D unless otherwise specifically stated.

When "C to D" is stated, it means greater than or equal to C and less than or equal to D unless otherwise specifically stated. When phrases such as "at least one of A, B, and C," "at least one of A, B, or C," "at least one selected from group of A, B, and C," or "at least one selected from A, B, and C" are used to specify a list of elements A, B, and C, the phrases may refer to any and all suitable combinations.

The term "use" may be considered synonymous with the term "utilize." As used in the present specification, the terms "substantially," "about," and other similar terms are used as terms of approximation rather than terms of degree, and are intended to consider an inherent variation in measured or calculated values recognized by those skilled in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be named a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the drawings. It is to be understood that the spatially relative terms are intended to encompass different orientations of the device in use or operation in addition to the orientation depicted in the drawings. For example, when the elements or features in the drawings are inverted, an element described as "lower" or "below" "becomes "upper" or "above." Therefore, the term "below" can encompass both the upward and downward directions.

The terms used in the present specification are intended to describe the embodiments of the present disclosure, and are not intended to limit the present disclosure.

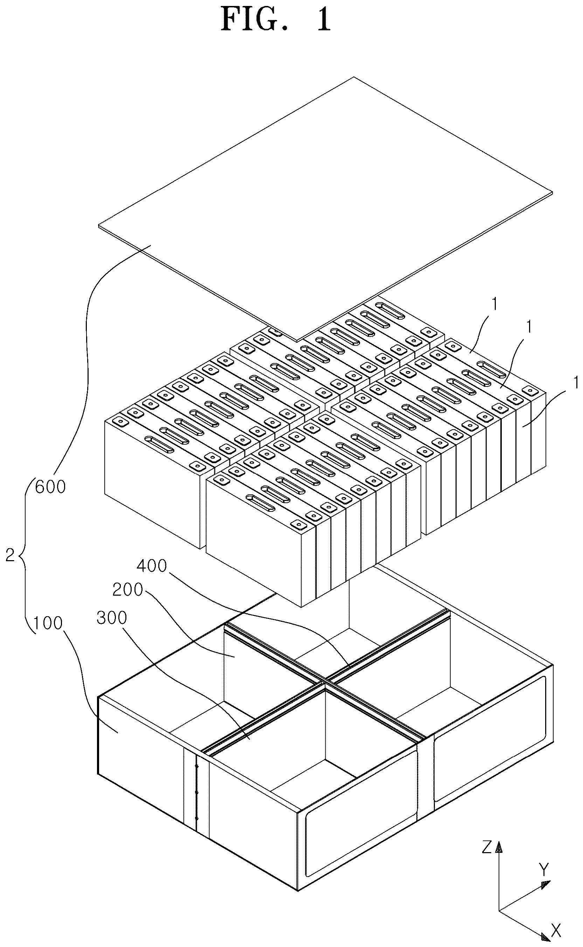

FIG. 1 is a perspective view schematically illustrating a configuration of a battery module according to an embodiment of the present disclosure.

Referring to FIG. 1, a battery module according to an embodiment includes a secondary battery 1 and a module housing 2.

The first direction described below may refer to a direction parallel to an X-axis based on FIG. 1, the second direction may refer to a direction parallel to a Y-axis based on FIG. 1, and the third direction may refer to a direction parallel to a Z-axis based on FIG. 1.

The secondary battery 1 may function as a unit structure that stores and supplies power in the battery module.

Herein, an example will be described in which the secondary battery 1 is a prismatic lithium ion secondary battery. However, the present disclosure is not limited thereto, and the secondary battery may be a lithium polymer battery or a cylindrical battery, for example.

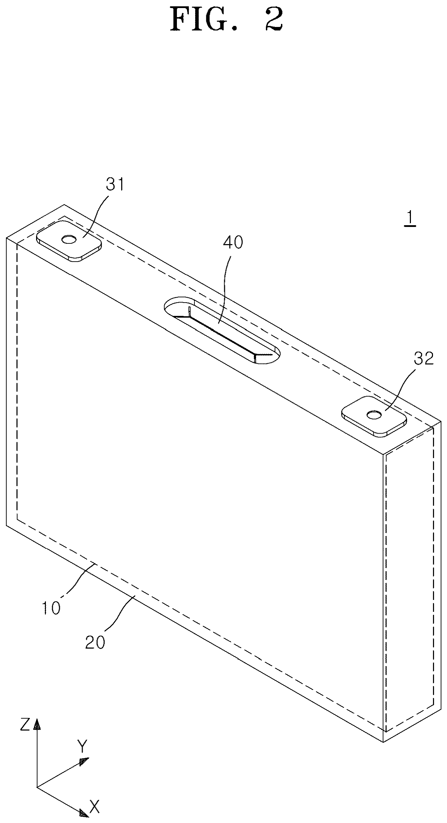

FIG. 2 is a view schematically illustrating a configuration of a secondary battery according to an embodiment of the present disclosure.

Referring to FIG. 2, a secondary battery 1 according to an embodiment may include an electrode assembly 10, a case 20, a first terminal 31, and a second terminal 32.

The electrode assembly 10 may function as a unit structure that performs charging and discharging operations of power in the secondary battery 1. The electrode assembly 10 may be accommodated in the case 20.

The electrode assembly 10 according to an embodiment may include a positive electrode plate, a negative electrode plate, and a separator disposed between the positive electrode plate and the negative electrode plate.

The electrode assembly 10 may have a stacked form in which a plurality of positive electrode plates, separators, and negative electrode plates are sequentially stacked, or may be formed to have a structure in which the positive electrode plates, separators, and negative electrode plates are stacked and wound around a winding axis in a clockwise or counterclockwise direction.

The positive electrode plate may be in a form of a foil including a metallic material, such as aluminum or an aluminum alloy. A type, size, or shape of the positive electrode plate is not particularly limited as long as the positive electrode plate is conductive and does not cause chemical changes in the secondary battery.

At least a portion of the positive electrode plate may be coated with a positive electrode active material layer. The positive electrode active material layer may be applied to both, or opposite, surfaces of the positive electrode plate, or may be applied to only one surface thereof.

The positive electrode plate may include a positive electrode active material.

The positive electrode active material may be a compound capable of reversible intercalation and deintercalation of lithium (a lithiated intercalation compound). In an embodiment, as the positive electrode active material, one or more of composite oxides of a metal selected from the group consisting of cobalt, manganese, nickel, iron, and a combination thereof and lithium may be used.

As an example, the positive electrode active material may include at least one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM). Here, 0 < x < 1, 0 < y <1, 0 < z < 1, and x+y+z = 1 may be satisfied. The positive electrode active material may include only one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM) or may include two or all of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM).

The positive electrode active material layer may further include a positive electrode conductive material.

The positive electrode conductive material imparts conductivity to the positive electrode active material layer, and any suitable electrically conductive material that does not cause a chemical change may be used. Examples of the positive electrode conductive material may include carbon-based materials, such as natural graphite, artificial graphite, carbon black, acetylene black, Ketjen black, carbon fibers, carbon nanofibers, and carbon nanotubes, metal-based materials in the form of a metal powder or metal fibers containing copper, nickel, aluminum, silver, and the like, conductive polymers, such as polyphenylene derivatives, or a mixture thereof.

The positive electrode active material layer may further include a positive electrode binder.

The positive electrode binder may attach the particles constituting the positive electrode active material to each other well, and also attach the positive electrode active material to the positive electrode plate well.

Examples of the positive electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

If the aqueous binder is used as the positive electrode binder, the aqueous binder may further include a cellulose series compound capable of imparting viscosity. As the cellulose series compound, one or more of carboxymethyl cellulose, hydroxypropylmethyl cellulose, methyl cellulose, and an alkali metal salt thereof may be mixed and used. In an embodiment, the alkali metal may be Na, K, or Li.

The dry binder may be a polymer material capable of being fiberized, for example, polytetrafluoroethylene, polyvinylidene fluoride, a polyvinylidene fluoride-hexafluoropropylene copolymer, polyethylene oxide, or a combination thereof.

The negative electrode plate may be in a form of a foil including a metallic material, such as copper, a copper alloy, nickel, or a nickel alloy. A type, size, or shape of the negative electrode plate is not particularly limited as long as the negative electrode plate is conductive and does not cause chemical changes in the secondary battery.

At least a portion of the negative electrode plate may be coated with a negative electrode active material layer. The negative electrode active material layer may be applied to both, or opposite, surfaces of the negative electrode plate, or may be applied to only one surface thereof.

In an embodiment, the negative electrode plate functions as a negative electrode, and the negative electrode plate may include a negative electrode active material.

The negative electrode active material may include a material capable of reversible intercalation/deintercalation of lithium ions, a lithium metal, a lithium metal alloy, a material capable of doping and dedoping of lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as amorphous, plate-like, flake-like, spherical, or fiber-like natural graphite or artificial graphite, and examples of the amorphous carbon may include soft carbon, hard carbon, mesophase pitch carbide, calcined coke, or the like.

In an embodiment, as the lithium metal alloy, an alloy of lithium and a metal selected from Na, K, Rb, Cs, Fr, Be, Mg, Ca, Sr, Si, Sb, Pb, In, Zn, Ba, Ra, Ge, Al, and Sn may be used.

As the material capable of doping and dedepoing of lithium, a Si-based negative electrode active material or a Sn-based negative electrode active material may be used. The Si-based negative electrode active material may be silicon, a silicon-carbon composite, SiOₓ (0 < x ≤ 2), a Si-Q alloy (Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnOₓ (0 < x ≤ 2, e.g., SnO2), a Sn-based alloy, or a combination thereof.

The silicon-carbon composite may be a composite of silicon and amorphous carbon. According to an embodiment, the silicon-carbon composite may be in the form of silicon particles and amorphous carbon coated on surfaces of the silicon particles. For example, the silicon-carbon composite may include a secondary particle (core) in which primary silicon particles are aggregated and an amorphous carbon coating layer (shell) located on a surface of the secondary particle. The amorphous carbon may be located between the primary silicon particles, for example, such that the primary silicon particles may be coated with amorphous carbon. The secondary particles may be dispersed in an amorphous carbon matrix.

In an embodiment, the silicon-carbon composite may further include crystalline carbon. For example, the silicon-carbon composite may include a core including crystalline carbon and silicon particles and an amorphous carbon coating layer located on a surface of the core.

The Si-based negative electrode active material or Sn-based negative electrode active material may be used in combination with a carbon-based negative electrode active material.

The negative electrode active material layer may further include a negative electrode conductive material and a negative electrode binder.

The negative electrode conductive material imparts conductivity to the negative electrode active material layer, and any suitable electrically conductive material that does not cause a chemical change may be used. Examples of the negative electrode conductive material may include carbon-based materials, such as natural graphite, artificial graphite, carbon black, acetylene black, Ketjen black, carbon fibers, carbon nanofibers, and carbon nanotubes, metal-based materials in the form of a metal powder or metal fibers containing copper, nickel, aluminum, silver, or the like, conductive polymers, such as polyphenylene derivatives, or a mixture thereof.

The negative electrode binder may well attach particles constituting the negative electrode active material and also may well attach the negative electrode active material to the negative electrode plate.

Examples of the negative electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

If the aqueous binder is used as the negative electrode binder, the aqueous binder may further include a cellulose series compound capable of giving viscosity. As the cellulose series compound, one or more of carboxymethyl cellulose, hydroxypropylmethyl cellulose, methyl cellulose, and an alkali metal salt thereof may be mixed and used. In an embodiment, the alkali metal may be Na, K, or Li.

The dry binder may be a polymer material capable of being fiberized, for example, polytetrafluoroethylene, polyvinylidene fluoride, a polyvinylidene fluoride-hexafluoropropylene copolymer, polyethylene oxide, or a combination thereof.

The separator may be disposed between the positive electrode plate and the negative electrode plate. The separator may prevent or substantially prevent a short circuit between the positive electrode plate and the negative electrode plate while allowing lithium ions to move therebetween.

In an embodiment, the separator may be disposed to completely cover the surface region of the electrode assembly 10. Accordingly, the separator may prevent or substantially prevent the positive electrode plate and the negative electrode plate from being directly exposed to the outside of the electrode assembly 10.

The separator may be made of polyethylene, polypropylene, polyvinylidene fluoride, or a multilayer film of two or more layers thereof, and a mixed multilayer film such as a two-layer separator of polyethylene/polypropylene, a three-layer separator of polyethylene/polypropylene/polyethylene, or a three-layer separator of polypropylene/polyethylene/polypropylene may be used.

The separator may include a porous substrate and a coating layer including an organic material, an inorganic material, or a combination thereof, which is positioned on one surface or both, or opposite, surfaces of the porous substrate.

The porous substrate may be a polymer film made of a polymer selected from polyolefins, such as polyethylene and polypropylene, polyesters, such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, glass fiber, and polytetrafluoroethylene (e.g., Teflon), or a copolymer or mixture of two or more of the above materials.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in a coating layer or may be in the form of a coating layer including (or containing) an organic material and a coating layer including (or containing) an inorganic material which are stacked on each other.

The case 20 may accommodate the electrode assembly 10.

The case 20 according to an embodiment may have a box shape with an empty interior. The case 20 may be formed of a metallic material, such as copper, aluminum, or nickel. A shape of the case 20 is not limited to the rectangular parallelepiped shape shown in FIG. 2, and may have any of various shapes.

The first terminal 31 and the second terminal 32 may be connected to the electrode assembly 10 and may protrude outward from the case 20. The first terminal 31 and the second terminal 32 may provide an electrical connection between the secondary battery 1 and an external electronic device, for example.

The first terminal 31 and the second terminal 32 may be respectively connected to the positive electrode plate and the negative electrode plate of the electrode assembly 10. The first terminal 31 and the second terminal 32 may be formed of an electrically conductive material, such as copper, nickel, or aluminum. Accordingly, the first terminal 31 and the second terminal 32 may respectively function as a positive electrode terminal and a negative electrode terminal of the secondary battery 1.

Specific shapes of the first terminal 31 and the second terminal 32 are not limited to the shapes shown in FIG. 2 and may have any of various shapes.

In an embodiment, the first terminal 31 and the second terminal 32 may be electrically insulated from the case 20 by a gasket or an insulator having insulating properties.

The secondary battery 1 according to an embodiment may further include a vent 40.

The vent 40 may open and close in response to a change in internal pressure of the case 20. That is, during normal operation of the secondary battery 1, the vent 40 may close the case 20 to prevent or substantially prevent an electrolyte or the like inside the case 20 from leaking out of the case 20, and to block moisture, foreign substances, or the like from entering the inside of the case 20. If thermal runaway occurs in the secondary battery 1, the vent 40 may open the case 20 to guide flames, gas, smoke, or the like generated inside the case 20 to be discharged to the outside of the case 20.

In an embodiment, the vent 40 may be formed in a generally plate shape. The vent 40 may be fixed to the case 20 by any of various types of coupling methods, such as any of welding, bolting, or fitting. In an embodiment, a thickness of the vent 40 may be less than that of the case 20. Accordingly, the vent 40 may easily rupture or break if the internal pressure of the case 20 increases. In an embodiment, the vent 40 may include a notch formed concavely inward to preferentially rupture if the internal pressure of the case 20 increases.

A plurality of secondary batteries 1 may be provided. The plurality of secondary batteries 1 may be arranged in multiple rows and columns in the first and second directions. A number and arrangement of the secondary batteries 1 are not limited to those shown in FIG. 1 and may be variously modified depending on a structure of the module housing 2 described below.

The plurality of secondary batteries 1 may be connected in series or in parallel by a bus bar or the like.

The module housing 2 may generally form an exterior of the battery module and may accommodate the secondary battery 1.

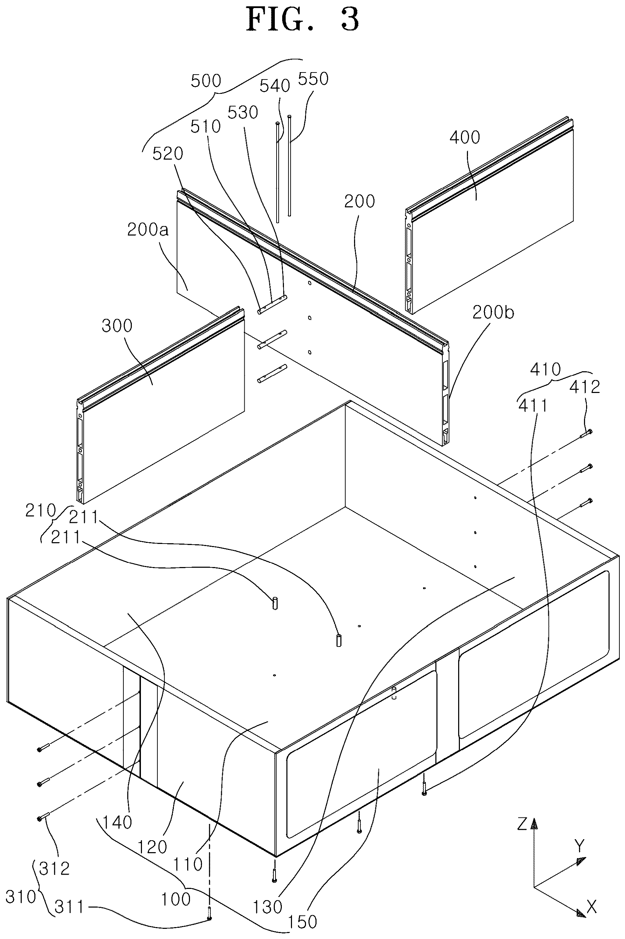

FIG. 3 is an exploded perspective view schematically illustrating a configuration of a module housing according to an embodiment of the present disclosure.

Referring to FIG. 3, the module housing 2 according to an embodiment includes a housing body 100, a first reinforcement frame 200, a second reinforcement frame 300, a third reinforcement frame 400, and a connecting member 500.

The housing body 100 may provide a space for accommodating the secondary battery 1. The housing body 100 may be formed of a metallic material, such as aluminum or steel to provide sufficient rigidity. In an embodiment, the housing body 100 may be formed by press forming and bending forming.

The housing body 100 according to an embodiment may include a bottom plate 110, a first end plate 120, a second end plate 130, a first side plate 140, and a second side plate 150.

The bottom plate 110 may form a lower exterior of the housing body 100 and may support the first and second end plates 120 and 130 and the first and second side plates 140 and 150.

The bottom plate 110 according to an embodiment may have a plate shape disposed perpendicular to the third direction. In an embodiment, the bottom plate 110 may have a rectangular shape. However, the shape of the bottom plate 110 is not limited thereto and may have any of various shapes, such as a polygonal, circular, or oval shape.

The first end plate 120 and the second end plate 130 may extend from the bottom plate 110 and form a part of the side exterior of the housing body 100.

According to an embodiment, the first end plate 120 and the second end plate 130 may extend upward from the bottom plate 110 in the third direction. The first end plate 120 and the second end plate 130 may have a plate shape that is perpendicular to the second direction. In an embodiment, the first end plate 120 and the second end plate 130 may have a rectangular shape. However, the shapes of the first end plate 120 and the second end plate 130 are not limited thereto, and may have any of various shapes, such as a polygonal, circular, or oval shape.

The first end plate 120 and the second end plate 130 may be disposed to face each other in the second direction. Lower end portions of the first end plate 120 and the second end plate 130 may be respectively connected to both, or opposite, end portions of the bottom plate 110, which are spaced apart in the second direction. In an embodiment, the first end plate 120 and the second end plate 130 may be integrally formed with the bottom plate 110 and then bent to be disposed perpendicular to the second direction. In an embodiment, the first end plate 120 and the second end plate 130 may be manufactured separately from the bottom plate 110 and then respectively coupled to both, or opposite, end portions of the bottom plate 110 by welding, bolting, or the like.

The first side plate 140 and the second side plate 150 may extend from the bottom plate 110 and form a remaining part of the side exterior of the housing body 100.

According to an embodiment, the first side plate 140 and the second side plate 150 may extend upward from the bottom plate 110 in the third direction. The first side plate 140 and the second side plate 150 may have a plate shape that is perpendicular to the first direction. In an embodiment, the first side plate 140 and the second side plate 150 may have a rectangular shape. However, the shapes of the first side plate 140 and the second side plate 150 are not limited thereto, and may have any of various shapes, such as a polygonal, circular, or oval shape.

The first side plate 140 and the second side plate 150 may be disposed to face each other in the first direction. Lower end portions of the first side plate 140 and the second side plate 150 may be respectively connected to both, or opposite, end portions of the bottom plate 110, which are spaced apart in the first direction. In an embodiment, the first side plate 140 and the second side plate 150 may be integrally formed with the bottom plate 110 and then bent to be disposed perpendicular to the first direction. In an embodiment, the first side plate 140 and the second side plate 150 may be manufactured separately from the bottom plate 110 and then respectively coupled to both end portions of the bottom plate 110 by welding, bolting, or the like.

Both, or opposite, end portions of the first side plate 140 and the second side plate 150 may be respectively connected to the first end plate 120 and the second end plate 130. In an embodiment, the first end plate 120, the second end plate 130, the first side plate 140, and the second side plate 150 may be disposed to form a closed curve that surrounds (e.g., entirely surrounds) the space above the bottom plate 110. Accordingly, the first end plate 120, the second end plate 130, the first side plate 140, and the second side plate 150 according to an embodiment may form a receiving space for the secondary battery 1 on the bottom plate 110.

The first reinforcement frame 200 may be disposed inside the housing body 100 and may reinforce rigidity of the housing body 100 in the first direction.

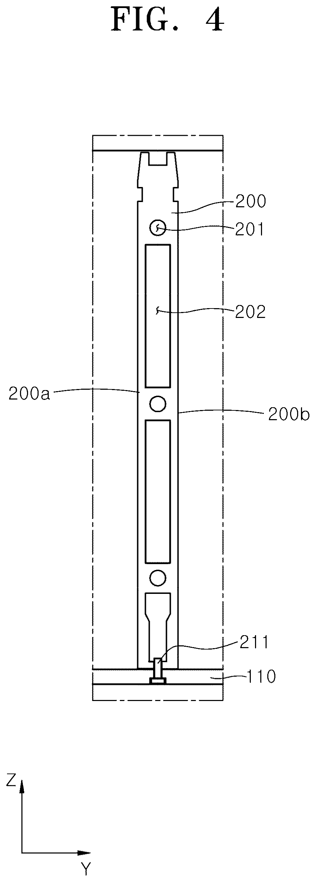

FIG. 4 is a cross-sectional view schematically illustrating a configuration of a first reinforcement frame according to an embodiment of the present disclosure.

Referring to FIGS. 3 and 4, the first reinforcement frame 200 according to an embodiment may have a plate shape extending in the first direction. That is, a longitudinal direction of the first reinforcement frame 200 may be arranged parallel to the first direction. A lower surface of the first reinforcement frame 200 may be seated on the bottom plate 110. Both, or opposite, end portions of the first reinforcement frame 200 may be disposed to face the inner surfaces of the first side plate 140 and the second side plate 150, respectively. Both, or opposite, end portions of the first reinforcement frame 200 may come into contact with the inner surfaces of the first side plate 140 and the second side plate 150, respectively.

The first reinforcement frame 200 according to an embodiment may include a first surface 200a and a second surface 200b that are opposite to each other.

The first surface 200a and the second surface 200b may be disposed perpendicular to the second direction.

The first surface 200a may be disposed to face an inner surface of the first end plate 120. The first surface 200a may be spaced by a distance (e.g., a predetermined distance) apart from the inner surface of the first end plate 120 in the first direction.

The second surface 200b may be disposed to face an inner surface of the second end plate 130. The second surface 200b may be spaced by a distance (e.g., a predetermined distance) apart from the inner surface of the second end plate 130 in the first direction.

In an embodiment, the first reinforcement frame 200 may be formed of aluminum. In an embodiment, the first reinforcement frame 200 may be formed by extrusion molding aluminum.

The first reinforcement frame 200 according to an embodiment may include a first through-hole 201.

The first through-hole 201 may have a form of a hole passing through the first reinforcement frame 200 in the first direction. Both, or opposite, end portions of the first through-hole 201 may respectively pass through both, or opposite, end portions of the first reinforcement frame 200, which are spaced apart, in the first direction. Both, or opposite, end portions of the first through-hole 201 may be disposed to face the first side plate 140 and the second side plate 150, respectively. In an embodiment, the first through-hole 201 may have a circular cross-section.

A plurality of first through-holes 201 may be provided. The plurality of first through-holes 201 may be arranged at intervals (e.g., predetermined intervals) in the third direction. A number of first through-holes 201 is not limited to that shown in FIGS. 3 and 4 and may be modified into various configurations.

The first reinforcement frame 200 according to an embodiment may further include a first frame hole 202.

The first frame hole 202 may have a form of a hole passing through the first reinforcement frame 200 in the first direction. Both, or opposite, end portions of the first frame hole 202 may respectively pass through both, or opposite, end portions of the first reinforcement frame 200, which are spaced apart, in the first direction. Both, or opposite, end portions of the first frame hole 202 may be disposed to face the first side plate 140 and the second side plate 150, respectively.

In an embodiment, a cross-sectional area of the first frame hole 202 may be greater than that of the first through-hole 201. In an embodiment, the first frame hole 202 may have a rectangular cross-section.

A plurality of first frame holes 202 may be provided. The plurality of first frame holes 202 may be arranged at intervals (e.g., predetermined intervals) in the third direction. The first through-holes 201 and the first frame holes 202 may be alternately disposed in the third direction. A number of first frame holes 202 is not limited to that shown in FIGS. 3 and 4 and may be modified into various configurations. Accordingly, the first reinforcement frame 200 according to an embodiment may be made lightweight by the first through-hole 201 and the first frame hole 202, and productivity may be improved.

The module housing 2 according to an embodiment may further include a first fixing member 210 that fixes the first reinforcement frame 200 to the housing body 100.

The first fixing member 210 according to an embodiment may include a first bottom fixing pin 211.

The first bottom fixing pin 211 may fix the first reinforcement frame 200 to the bottom plate 110.

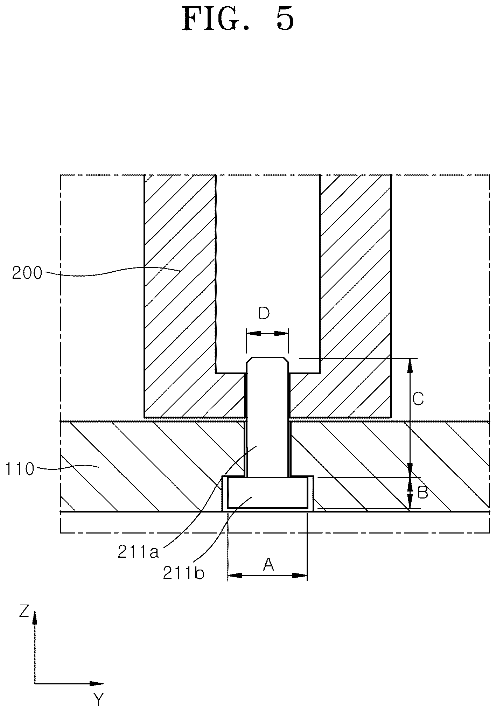

FIG. 5 is an enlarged cross-sectional view schematically illustrating a configuration of a first bottom fixing pin according to an embodiment of the present disclosure.

Referring to FIGS. 3 to 5, the first bottom fixing pin 211 according to an embodiment may include a first bottom rod 211a and a first bottom head 211b.

The first bottom rod 211a may pass through the bottom plate 110 and may be inserted into the first reinforcement frame 200.

The first bottom rod 211a according to an embodiment may have a form of a rod arranged with a longitudinal direction thereof parallel to the third direction. The first bottom rod 211a may pass through lower surfaces of the bottom plate 110 and the first reinforcement frame 200 and may be inserted into the first reinforcement frame 200. The first bottom rod 211a may be fixed to the bottom plate 110 and the first reinforcement frame 200 by any of various types of coupling methods, such as interference fitting, screw fitting, or hook fitting.

In an embodiment, the first bottom rod 211a may have an elongated rod shape with a length greater than a diameter thereof. In an embodiment, for example, a ratio C/D of a length C to a diameter D of the first bottom rod 211a may be 3 or greater.

The first bottom head 211b may be connected to the first bottom rod 211a and may be in contact with the bottom plate 110.

The first bottom head 211b according to an embodiment may be connected to an end portion (the lower end portion in FIG. 4) of the first bottom rod 211a, which is disposed to face the external space of the bottom plate 110.

A diameter A of the first bottom head 211b may be greater than the diameter D of the first bottom rod 211a. In an embodiment, for example, a ratio A/D of the diameter A of the first bottom head 211b to the diameter D of the first bottom rod 211a may be 2 or greater. In an embodiment, a ratio B/D of a length B of the first bottom head 211b to the diameter D of the first bottom rod 211a may be 0.5 or greater.

The first bottom head 211b may be inserted into the bottom plate 110. A surface of the first bottom head 211b that faces the bottom plate 110 may be in contact with the bottom plate 110. Accordingly, the first bottom head 211b may press the bottom plate 110 toward the first reinforcement frame 200 to enhance a coupling force between the first reinforcement frame 200 and the bottom plate 110.

One or more first bottom fixing pins 211 may be provided. In FIG. 3, a plurality of first bottom fixing pins 211 are shown as an example. However, the present disclosure is not limited thereto, and a single first bottom fixing pin 211 may be formed.

In an embodiment, a plurality of first bottom fixing pins 211 are provided, and the first bottom fixing pins 211 may be arranged at intervals (e.g., predetermined intervals) in the first direction.

The second reinforcement frame 300 and the third reinforcement frame 400 may be disposed inside the housing body 100 and may reinforce rigidity of the housing body 100 in the second direction.

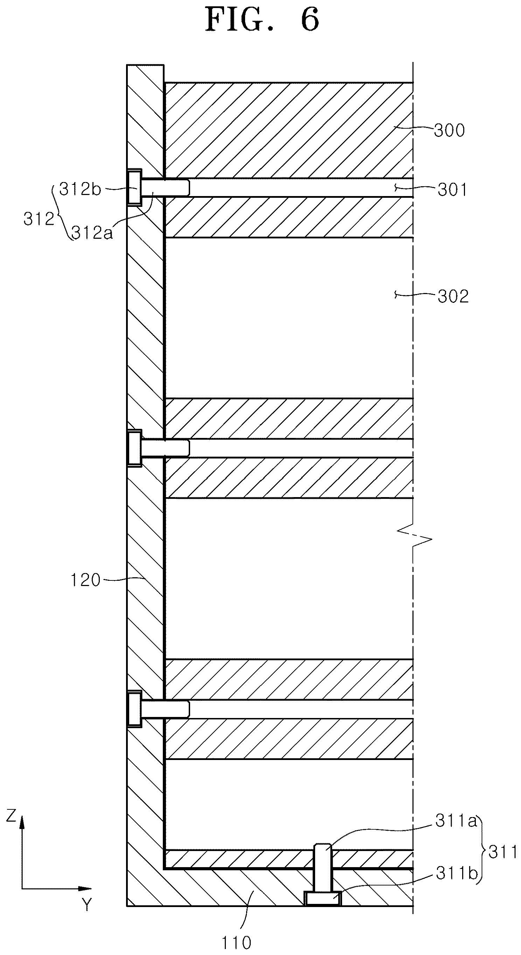

FIG. 6 is a cross-sectional view schematically illustrating a configuration of a second reinforcement frame according to an embodiment of the present disclosure.

Referring to FIGS. 3 and 6, the second reinforcement frame 300 according to an embodiment may be disposed to face the first surface 200a of the first reinforcement frame 200. For example, the second reinforcement frame 300 may be disposed between the first surface 200a of the first reinforcement frame 200 and the first end plate 120. The second reinforcement frame 300 may have a plate shape extending in the second direction. That is, a longitudinal direction of the second reinforcement frame 300 may be disposed parallel to the second direction.

A lower surface of the second reinforcement frame 300 may be seated on the bottom plate 110. Both, or opposite, end portions of the second reinforcement frame 300 may be disposed to face the first surface 200a of the first reinforcement frame 200 and the inner surface of the first end plate 120, respectively. The second reinforcement frame 300 may come into contact with the first surface 200a of the first reinforcement frame 200 and the inner surface of the first end plate 120.

In an embodiment, the second reinforcement frame 300 may be formed of aluminum. In an embodiment, the second reinforcement frame 300 may be formed by extrusion molding aluminum.

The second reinforcement frame 300 according to an embodiment may include a second through-hole 301.

The second through-hole 301 may have a form of a hole passing through the second reinforcement frame 300 in the second direction. Both, or opposite, end portions of the second through-hole 301 may respectively pass through both, or opposite, end portions of the second reinforcement frame 300, which are spaced apart, in the second direction. Both, or opposite, end portions of the second through-hole 301 may be disposed to face the first surface 200a of the first reinforcement frame 200 and the inner surface of the first end plate 120, respectively. In an embodiment, the second through-hole 301 may have a circular cross-section.

In an embodiment, a plurality of second through-holes 301 may be provided. The plurality of second through-holes 301 may be arranged at intervals (e.g., predetermined intervals) in the third direction. A number of second through-holes 301 is not limited to those shown in FIG. 6 and may be modified into various configurations.

The second reinforcement frame 300 according to an embodiment may further include a second frame hole 302.

The second frame hole 302 may have a form of a hole passing through the second reinforcement frame 300 in the second direction. Both, or opposite, end portions of the second frame hole 302 may respectively pass through both, or opposite, end portions of the second reinforcement frame 300, which are spaced apart, in the second direction. Both, or opposite, end portions of the second frame hole 302 may be disposed to face the first surface 200a of the first reinforcement frame 200 and the inner surface of the first end plate 120, respectively.

In an embodiment, a cross-sectional area of the second frame hole 302 may be greater than that of the second through-hole 301. In an embodiment, the second frame hole 302 may have a rectangular cross-section.

In an embodiment, a plurality of second frame holes 302 may be provided. The plurality of second frame holes 302 may be arranged at intervals (e.g., predetermined intervals) in the third direction. The second through-holes 301 and the second frame holes 302 may be alternately disposed in the third direction. A number of second frame holes 302 is not limited to those shown in FIG. 6 and may be modified into various configurations. Accordingly, the second reinforcement frame 300 according to an embodiment may be made lightweight by the second through-hole 301 and the second frame hole 302, and productivity may be improved.

The module housing 2 according to an embodiment may further include a second fixing member 310 that fixes the second reinforcement frame 300 to the housing body 100.

The second fixing member 310 according to an embodiment may include a second bottom fixing pin 311 and a first end fixing pin 312.

The second bottom fixing pin 311 may fix the second reinforcement frame 300 to the bottom plate 110.

The second bottom fixing pin 311 according to an embodiment may include a second bottom rod 311a and a second bottom head 311b.

The second bottom rod 311a may pass through the bottom plate 110 and may be inserted into the second reinforcement frame 300.

The second bottom rod 311a according to an embodiment may have a form of a rod arranged with a longitudinal direction thereof parallel to the third direction. The second bottom rod 311a may pass through the lower surfaces of the bottom plate 110 and the second reinforcement frame 300, and may be inserted into the second reinforcement frame 300. The second bottom rod 311a may be fixed to the bottom plate 110 and the second reinforcement frame 300 by any of various types of coupling methods, such as interference fitting, screw fitting, or hook fitting.

In an embodiment, the second bottom rod 311a may have an elongated rod shape with a length greater than a diameter thereof. In an embodiment, a diameter-to-length ratio of the second bottom rod 311a may be equal to the ratio of the diameter D to the length C of the first bottom rod 211a described above. In an embodiment, for example, the ratio of the length to the diameter of the second bottom rod 311a may be 3 or greater.

The second bottom head 311b may be connected to the second bottom rod 311a and may be in contact with the bottom plate 110.

The second bottom head 311b according to an embodiment may be connected to an end portion (the lower end portion in FIG. 6) of the second bottom rod 311a, which is disposed to face the external space of the bottom plate 110.

The diameter of the second bottom head 311b may be greater than that of the second bottom rod 311a. In an embodiment, the ratio of the diameter or length of the second bottom head 311b to the diameter of the second bottom rod 311a may be equal to the ratio of the diameter A or length B of the first bottom head 211b to the diameter D of the first bottom rod 211a. In an embodiment, for example, the ratio of the diameter of the second bottom head 311b to the diameter of the second bottom rod 311a may be 2 or greater. In an embodiment, the ratio of the length of the second bottom head 311b to the diameter of the second bottom rod 311a may be 0.5 or greater.

The second bottom head 311b may be inserted into the bottom plate 110. A surface of the second bottom head 311b that faces the bottom plate 110 may be in contact with the bottom plate 110. Accordingly, the second bottom head 311b may press the bottom plate 110 toward the second reinforcement frame 300 to enhance a coupling force between the second reinforcement frame 300 and the bottom plate 110.

One or more second bottom fixing pins 311 may be provided. In FIG. 3, a plurality of second bottom fixing pins 311 are shown as an example. However, the present disclosure is not limited thereto, and a single second bottom fixing pin 311 may be provided.

In an embodiment, a plurality of second bottom fixing pins 311 are provided, and the second bottom fixing pins 311 may be arranged at intervals (e.g., predetermined intervals) in the second direction.

The first end fixing pin 312 may fix the second reinforcement frame 300 to the first end plate 120.

The first end fixing pin 312 according to an embodiment may include a first end rod 312a and a first end head 312b.

The first end rod 312a may pass through the first end plate 120 and may be inserted into the second reinforcement frame 300.

The first end rod 312a according to an embodiment may have a form of a rod arranged with a longitudinal direction thereof parallel to the second direction. The first end rod 312a may pass through the side surfaces of the first end plate 120 and the second reinforcement frame 300, and may be inserted into the second reinforcement frame 300. The first end rod 312a may be fixed to the first end plate 120 and the second reinforcement frame 300 by any of various types of coupling methods, such as interference fitting, screw fitting, or hook fitting.

In an embodiment, the first end rod 312a may have an elongated rod shape with a length greater than a diameter thereof. In an embodiment, a diameter-to-length ratio of the first end rod 312a may be equal to the ratio of the diameter D to the length C of the first bottom rod 211a described above. In an embodiment, for example, the ratio of the length to the diameter of the first end rod 312a may be 3 or greater.

The first end head 312b may be connected to the first end rod 312a and may be in contact with the first end plate 120.

The first end head 312b according to an embodiment may be connected to an end portion (the left end portion in FIG. 6) of the first end rod 312a, which is disposed to face the external space of the first end plate 120.

The diameter of the first end head 312b may be greater than that of the first end rod 312a. In an embodiment, the ratio of the diameter A or length B of the first end head 312b to the diameter D of the first end rod 312a may be equal to the ratio of the diameter A or length B of the first bottom head 211b to the diameter D of the first bottom rod 211a. In an embodiment, for example, the ratio of the diameter of the first end head 312b to the diameter of the first end rod 312a may be 2 or greater. In an embodiment, the ratio of the length of the first end head 312b to the diameter of the first end rod 312a may be 0.5 or greater.

The first end head 312b may be inserted into the first end plate 120. A surface of the first end head 312b that faces the first end plate 120 may be in contact with the first end plate 120. Accordingly, the first end head 312b may press the first end plate 120 toward the second reinforcement frame 300 to enhance a coupling force between the second reinforcement frame 300 and the first end plate 120.

One or more first end fixing pins 312 may be provided. In FIG. 3, a plurality of first end fixing pins 312 are shown as an example. However, the present disclosure is not limited thereto, and a single first end fixing pin 312 may be provided.

In an embodiment, a plurality of first end fixing pins 312 are provided, and the first end fixing pins 312 may be arranged at intervals (e.g., predetermined intervals) in the third direction.

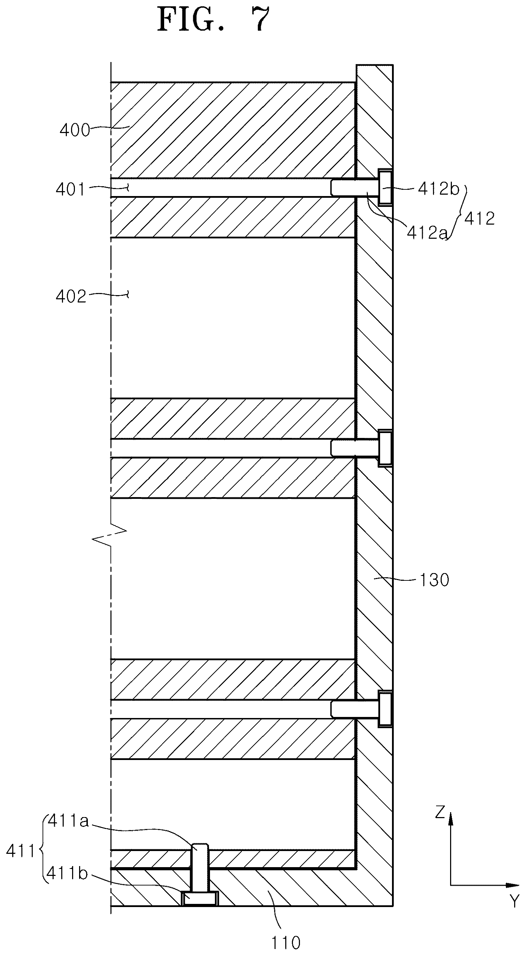

FIG. 7 is a cross-sectional view schematically illustrating a configuration of a third reinforcement frame according to an embodiment of the present disclosure.

Referring to FIGS. 3 and 7, the third reinforcement frame 400 according to an embodiment may be disposed to face the second surface 200b of the first reinforcement frame 200. For example, the third reinforcement frame 400 may be disposed between the second surface 200b of the first reinforcement frame 200 and the second end plate 130. The third reinforcement frame 400 may have a plate shape extending in the second direction. That is, a longitudinal direction of the third reinforcement frame 400 may be disposed parallel to the second direction.

A lower surface of the third reinforcement frame 400 may be seated on the bottom plate 110. Both, or opposite, end portions of the third reinforcement frame 400 may be disposed to face the second surface 200b of the first reinforcement frame 200 and the inner surface of the second end plate 130, respectively. The third reinforcement frame 400 may come into contact with the second surface 200b of the first reinforcement frame 200 and the inner surface of the second end plate 130.

In an embodiment, the third reinforcement frame 400 may be formed of aluminum. In an embodiment, the third reinforcement frame 400 may be formed by extrusion molding aluminum.

The third reinforcement frame 400 according to an embodiment may include a third through-hole 401.

The third through-hole 401 may have a form of a hole passing through the third reinforcement frame 400 in the second direction. Both, or opposite, end portions of the third through-hole 401 may pass through both, or opposite, end portions of the third reinforcement frame 400, which are spaced apart, in the second direction, respectively. Both, or opposite, end portions of the third through-hole 401 may be disposed to face the second surface 200b of the first reinforcement frame 200 and the inner surface of the second end plate 130, respectively. In an embodiment, the third through-hole 401 may have a circular cross-section.

A plurality of third through-holes 401 may be provided. The plurality of third through-holes 401 may be arranged at intervals (e.g., predetermined intervals) in the third direction. A number of third through-holes 401 is not limited to those shown in FIG. 7 and may be modified into various configurations.

The third reinforcement frame 400 according to an embodiment may further include a third frame hole 402.

The third frame hole 402 may have a form of a hole passing through the third reinforcement frame 400 in the second direction. Both, or opposite, end portions of the third frame hole 402 may pass through both, or opposite, end portions of the third reinforcement frame 400, which are spaced apart, in the second direction, respectively. Both, or opposite, end portions of the third frame hole 402 may be disposed to face the second surface 200b of the first reinforcement frame 200 and the inner surface of the second end plate 130, respectively.

In an embodiment, a cross-sectional area of the third frame hole 402 may be greater than that of the third through-hole 401. In an embodiment, the third frame hole 402 may have a rectangular cross-section.

A plurality of third frame holes 402 may be provided. The plurality of third frame holes 402 may be arranged at intervals (e.g., predetermined intervals) in the third direction. The third through-holes 401 and the third frame holes 402 may be alternately disposed in the third direction. A number of third frame holes 402 is not limited to those shown in FIG. 7 and may be modified into various configurations. Accordingly, the third reinforcement frame 400 according to an embodiment may be made lightweight by the third through-hole 401 and the third frame hole 402, and productivity may be improved.

The module housing 2 according to an embodiment may further include a third fixing member 410 that fixes the third reinforcement frame 400 to the housing body 100.

The third fixing member 410 according to an embodiment may include a third bottom fixing pin 411 and a second end fixing pin 412.

The third bottom fixing pin 411 may fix the third reinforcement frame 400 to the bottom plate 110.

The third bottom fixing pin 411 according to an embodiment may include a third bottom rod 411a and a third bottom head 411b.

The third bottom rod 411a may pass through the bottom plate 110 and may be inserted into the third reinforcement frame 400.

The third bottom rod 411a according to an embodiment may have a form of a rod arranged with a longitudinal direction thereof parallel to the third direction. The third bottom rod 411a may pass through the lower surfaces of the bottom plate 110 and the third reinforcement frame 400 and may be inserted into the third reinforcement frame 400. The third bottom rod 411a may be fixed to the bottom plate 110 and the third reinforcement frame 400 by any of various types of coupling methods, such as interference fitting, screw fitting, or hook fitting.

In an embodiment, the third bottom rod 411a may have an elongated rod shape with a length greater than a diameter thereof. In an embodiment, a diameter-to-length ratio of the third bottom rod 411a may be equal to the ratio of the diameter D to the length C of the first bottom rod 211a described above. In an embodiment, for example, the ratio of the length to the diameter of the third bottom rod 411a may be 3 or greater.

The third bottom head 411b may be connected to the third bottom rod 411a and may be in contact with the bottom plate 110.

The third bottom head 411b according to an embodiment may be connected to an end portion (the lower end portion in FIG. 7) of the third bottom rod 411a disposed to face the external space of the bottom plate 110.

The diameter of the third bottom head 411b may be greater than that of the third bottom rod 411a. In an embodiment, the ratio of the diameter or length of the third bottom head 411b to the diameter of the third bottom rod 411a may be equal to the ratio of the diameter A or length B of the first bottom head 211b to the diameter D of the first bottom rod 211a. In an embodiment, for example, the ratio of the diameter of the third bottom head 411b to the diameter of the third bottom rod 411a may be 2 or greater. In an embodiment, the ratio of the length of the third bottom head 411b to the diameter of the third bottom rod 411a may be 0.5 or greater.

The third bottom head 411b may be inserted into the bottom plate 110. A surface of the third bottom head 411b that faces the bottom plate 110 may be in contact with the bottom plate 110. Accordingly, the third bottom head 411b may press the bottom plate 110 toward the third reinforcement frame 400 to enhance a coupling force between the third reinforcement frame 400 and the bottom plate 110.

One or more third bottom fixing pins 411 may be provided. In FIG. 3, a plurality of third bottom fixing pins 411 are shown as an example. However, the present disclosure is not limited thereto, and a single third bottom fixing pin 411 may be provided.

In an embodiment, a plurality of third bottom fixing pins 411 are provided, and the third bottom fixing pins 411 may be arranged at intervals (e.g., predetermined intervals) in the second direction.

The second end fixing pin 412 may fix the third reinforcement frame 400 to the second end plate 130.

The second end fixing pin 412 according to an embodiment may include a second end rod 412a and a second end head 412b.

The second end rod 412a may pass through the second end plate 130 and may be inserted into the third reinforcement frame 400.

The second end rod 412a according to an embodiment may have a form of a rod arranged with a longitudinal direction thereof parallel to the second direction. The second end rod 412a may pass through the side surfaces of the second end plate 130 and the third reinforcement frame 400 and may be inserted into the third reinforcement frame 400. The second end rod 412a may be fixed to the second end plate 130 and the third reinforcement frame 400 by any of various types of coupling methods, such as interference fitting, screw fitting, or hook fitting.

In an embodiment, the second end rod 412a may have an elongated rod shape with a length greater than a diameter thereof. In an embodiment, a diameter-to-length ratio of the second end rod 412a may be equal to the ratio of the diameter D to the length C of the first bottom rod 211a described above. In an embodiment, for example, the ratio of the length to the diameter of the second end rod 412a may be 3 or greater.

The second end head 412b may be connected to the second end rod 412a and may be in contact with the second end plate 130.

The second end head 412b according to an embodiment may be connected to an end portion (the right end portion in FIG. 7) of the second end rod 412a disposed to face the external space of the second end plate 130.

The diameter of the second end head 412b may be greater than that of the second end rod 412a. In an embodiment, the ratio of the diameter or length of the second end head 412b to the diameter of the second end rod 412a may be equal to the ratio of the diameter A or length B of the first bottom head 211b to the diameter D of the first bottom rod 211a. In an embodiment, for example, the ratio of the diameter of the second end head 412b to the diameter of the second end rod 412a may be 2 or greater. In an embodiment, the ratio of the length of the second end head 412b to the diameter of the second end rod 412a may be 0.5 or greater.

The second end head 412b may be inserted into the interior of the second end plate 130. A surface of the second end head 412b that faces the second end plate 130 may be in contact with the second end plate 130. Accordingly, the second end head 412b may press the second end plate 130 toward the third reinforcement frame 400 to enhance a coupling force between the third reinforcement frame 400 and the second end plate 130.

One or more second end fixing pins 412 may be provided. In FIG. 3, a plurality of second end fixing pins 412 are shown as an example. However, the present disclosure is not limited thereto, and a single second end fixing pin 412 may be provided.

In an embodiment, a plurality of second end fixing pins 412 are provided, and the second end fixing pins 412 may be arranged at intervals (e.g., predetermined intervals) in the third direction.

The second reinforcement frame 300 and the third reinforcement frame 400 may be disposed to face each other in the second direction. For example, the second reinforcement frame 300 and the third reinforcement frame 400 may be arranged in a row in the second direction with the first reinforcement frame 200 interposed therebetween.

A plurality of secondary batteries 1 may be disposed in a certain number (e.g., a predetermined number) in each interior space of the housing body 100 partitioned by the first, second, and third reinforcement frames 200, 300, and 400.

The connecting member 500 may connect the first, second, and third reinforcement frames 200, 300, and 400. Accordingly, the connecting member 500 may improve rigidity of the module housing 2 by distributing a load applied to the first, second, and third reinforcement frames 200, 300, and 400.

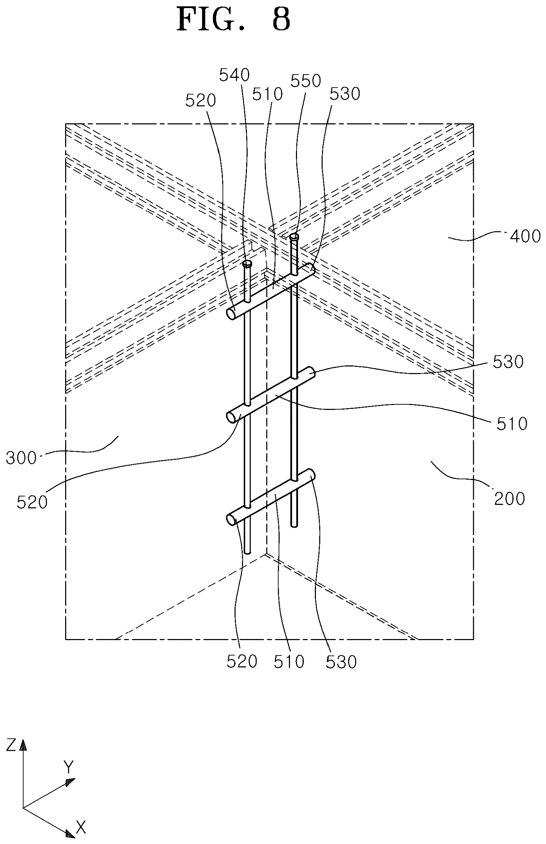

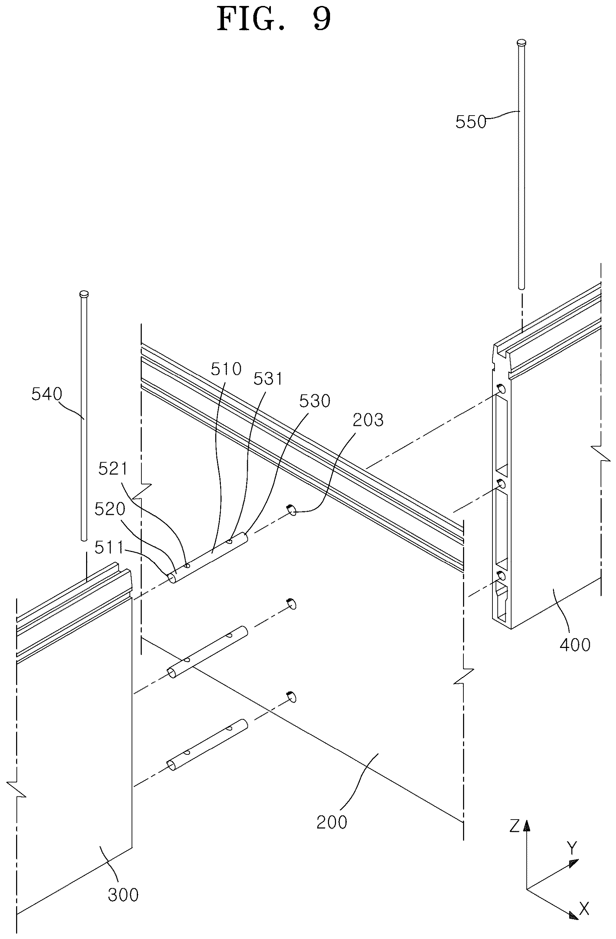

FIG. 8 is a perspective view schematically illustrating a configuration of a connecting member according to an embodiment of the present disclosure. FIG. 9 is an exploded perspective view schematically illustrating a configuration of the connecting member according to an embodiment of the present disclosure.

Referring to FIGS. 8 and 9, the connecting member 500 according to an embodiment may include a first connecting body 510, a second connecting body 520, and a third connecting body 530.

The first connecting body 510 may pass through the first reinforcement frame 200.

The first connecting body 510 according to an embodiment may have a form of a rod disposed parallel to the second direction. In an embodiment, the first connecting body 510 may have a circular cross-section. However, a cross-sectional shape of the first connecting body 510 is not limited to the circular shape and may have any of various shapes, such as an oval or polygon.

The first connecting body 510 may pass through the first reinforcement frame 200 via a connecting hole 203 formed in the first reinforcement frame 200.

For example, the connecting hole 203 may have a form of a hole passing through the first reinforcement frame 200 in the second direction. Both, or opposite, end portions of the connecting hole 203 may pass through the first surface 200a and the second surface 200b of the first reinforcement frame 200. Both, or opposite, end portions of the connecting hole 203 may be connected to the second through-hole 301 of the second reinforcement frame 300 and the third through-hole 401 of the third reinforcement frame 400, respectively. The connecting hole 203, the second through-hole 301, and the third through-hole 401 may be arranged coaxially. In an embodiment, a diameter of the connecting hole 203 may be equal to those of the second through-hole 301 and the third through-hole 401.

A plurality of connecting holes 203 may be provided. The plurality of connecting holes 203 may be arranged in the third direction. Both, or opposite, end portions of each connecting hole 203 may be connected to a different second through-hole 301 and third through-hole 401.

The first connecting body 510 may be inserted into the connecting hole 203. The first connecting body 510 may be fixed in the connecting hole 203 by interference fitting, screw fitting, or the like.

Both, or opposite, end portions of the first connecting body 510 may protrude outward from the first surface 200a and the second surface 200b of the first reinforcement frame 200, respectively.

A plurality of first connecting bodies 510 may be provided. A number of first connecting bodies 510 may be equal to the number of connecting holes 203. The plurality of first connecting bodies 510 may be arranged at intervals (e.g., predetermined intervals) in the third direction. Each of the first connecting bodies 510 may be inserted into a different connecting hole 203.

The second connecting body 520 may extend from the first connecting body 510 and may be inserted into the second reinforcement frame 300.

The second connecting body 520 according to an embodiment may extend from an end portion of the first connecting body 510 that protrudes outward from the first surface 200a of the first reinforcement frame 200. A longitudinal direction of the second connecting body 520 may be parallel to the second direction. The second connecting body 520 may be inserted into the second through-hole 301 formed in the second reinforcement frame 300. The second connecting body 520 may be fixed in the second through-hole 301 by interference fitting, screw fitting, or the like.

A plurality of second connecting bodies 520 may be provided. Each second connecting body 520 may individually extend from an end portion of a different first connecting body 510 toward the second reinforcement frame 300. Each second connecting body 520 may be individually inserted into a different second through-hole 301.

The third connecting body 530 may extend from the first connecting body 510 and may be inserted into the third reinforcement frame 400.

The third connecting body 530 according to an embodiment may extend from the first connecting body 510 in a direction opposite to the second connecting body 520. For example, the third connecting body 530 may extend from another end portion of the first connecting body 510 that protrudes outward from the second surface 200b of the first reinforcement frame 200. A longitudinal direction of the third connecting body 530 may be parallel to the second direction. The third connecting body 530 may be inserted into the third through-hole 401 formed in the third reinforcement frame 400. The third connecting body 530 may be fixed in the third through-hole 401 by interference fitting, screw fitting, or the like.

A plurality of third connecting bodies 530 may be provided. Each third connecting body 530 may individually extend from another end portion of a different first connecting body 510 toward the third reinforcement frame 400. Each third connecting body 530 may be individually inserted into a different third through-hole 401.

The connecting member 500 according to an embodiment may further include a first connecting pin 540 and a second connecting pin 550.

The first connecting pin 540 may be inserted into the second reinforcement frame 300 and may pass through the second connecting body 520.

The first connecting pin 540 according to an embodiment may have a form of a rod disposed parallel to the third direction. The first connecting pin 540 may be inserted into the second reinforcement frame 300 through an upper surface of the second reinforcement frame 300, which is disposed on the opposite side of the bottom plate 110.

The first connecting pin 540 may pass through the second connecting body 520 via a first insertion hole 521 formed in the second connecting body 520.

For example, the first insertion hole 521 may have the form of a hole passing through the second connecting body 520 in a direction intersecting the second direction. In an embodiment, the second connecting body 520 is inserted into the second through-hole 301, and a central axis of the first insertion hole 521 may be aligned parallel to the third direction.

A lower end portion of the first connecting pin 540 inserted into the second reinforcement frame 300 may be inserted into the first insertion hole 521 and may protrude below the second connecting body 520.

The central axes of the first insertion holes 521 formed in the plurality of second connecting bodies 520 may be coaxially aligned in the third direction. The lower end portion of the first connecting pin 540 inserted into the second reinforcement frame 300 may be sequentially inserted into the plurality of first insertion holes 521 and may pass through all of the second connecting bodies 520 arranged in the third direction.

A lower end portion of the second connecting body 520 may be disposed inside the second reinforcement frame 300 and may also pass through the lower surface of the second reinforcement frame 300.

Accordingly, the second connecting body 520 may be securely fixed within the second through-hole 301 without being separated from the second through-hole 301.

The second connecting pin 550 may be inserted into the third reinforcement frame 400 and may pass through the third connecting body 530.

The second connecting pin 550 according to an embodiment may have the form of a rod disposed parallel to the third direction. The second connecting pin 550 may be inserted into the third reinforcement frame 400 through an upper surface of the third reinforcement frame 400 disposed opposite to the bottom plate 110.

The second connecting pin 550 may pass through the third connecting body 530 via a second insertion hole 531 formed in the third connecting body 530.

For example, the second insertion hole 531 may have a form of a hole passing through the third connecting body 530 in a direction intersecting the second direction. In an embodiment, the third connecting body 530 is inserted into the third through-hole 401, a central axis of the second insertion hole 531 may be aligned parallel to the third direction.

A lower end portion of the second connecting pin 550 inserted into the third reinforcement frame 400 may be inserted into the second insertion hole 531 and may protrude below the third connecting body 530.

In an embodiment, the central axes of the second insertion holes 531 formed in the plurality of third connecting bodies 530 may be coaxially aligned in the third direction. The lower end portion of the second connecting pin 550 inserted into the third reinforcement frame 400 may be sequentially inserted into the plurality of second insertion holes 531 and may pass through all of the third connecting bodies 530 arranged in the third direction.

A lower end portion of the third connecting body 530 may be disposed inside the third reinforcement frame 400 and may also pass through the lower surface of the third reinforcement frame 400.

Accordingly, the third connecting body 530 may be securely fixed within the third through-hole 401 without being separated from the third through-hole 401.

The connecting member 500 according to an embodiment may further include an alignment protrusion 511.

The alignment protrusion 511 may guide the central axes of the first and second insertion holes 521 and 531 to be aligned parallel to the third direction when the second and third connecting bodies 520 and 530 are inserted into the second and third reinforcement frames 300 and 400, respectively.

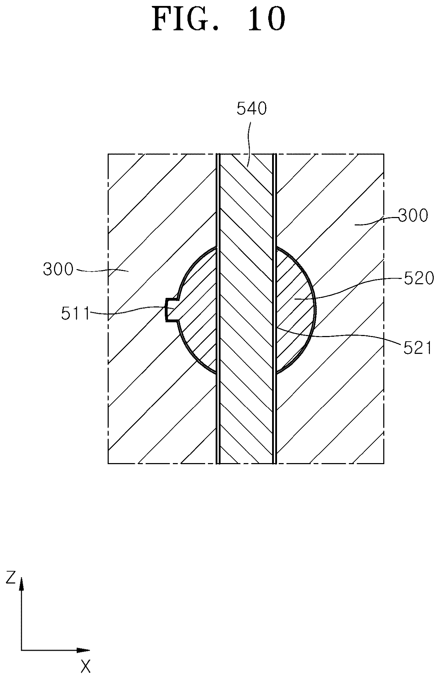

FIG. 10 is a schematic view illustrating a configuration of an alignment protrusion according to an embodiment of the present disclosure.

Referring to FIGS. 8 to 10, the alignment protrusion 511 may protrude from at least one of the first connecting body 510, the second connecting body 520, and the third connecting body 530. Herein, an example in which the alignment protrusions 511 protrude from all of the first connecting body 510, the second connecting body 520, and the third connecting body 530 will be described. However, the alignment protrusion 511 is not limited thereto, and may protrude from any one or two of the first connecting body 510, the second connecting body 520, and the third connecting body 530.

The alignment protrusions 511 according to an embodiment may protrude from the first connecting body 510, the second connecting body 520, and the third connecting body 530 in a direction perpendicular to the second direction. The alignment protrusions 511 may be inserted into the first connecting body 510, the second connecting body 520, and the third connecting body 530. In an embodiment, the inner surfaces of the connecting hole 203 of the first reinforcement frame 200, the second through-hole 301 of the second reinforcement frame 300, and the third through-hole 401 of the third reinforcement frame 400 may be formed with grooves into which the alignment protrusions 511 may be inserted. As the alignment protrusions 511 are inserted into the first, second, and third connecting bodies 510, 520, and 530, the central axes of the first and second insertion holes 521 and 531 may be aligned parallel to the third direction.

The module housing 2 according to an embodiment may further include a housing cover 600.

The housing cover 600 may be coupled to the housing body 100, and may seal the housing body 100.

The housing cover 600 according to an embodiment may have a form of a plate disposed perpendicular to the third direction. The housing cover 600 may be mounted on an upper end portion of the housing body 100 and, in an embodiment, to upper end portions of the first end plate 120, the second end plate 130, the first side plate 140, and the second side plate 150. The housing cover 600 may be fixed to the upper end portions of the second end plate 130, the first side plate 140, and the second side plate 150 by any of various types of coupling methods, such as any of welding, bolting, or fitting.

Herein, a module housing 2 according to another embodiment of the present disclosure will be described.

The module housing 2 according to the present embodiment may be configured to differ from the module housing 2 according to the previously described embodiment of the present disclosure in a configuration of the connecting members 500.

Accordingly, in describing the module housing 2 according to the present embodiment, only the detailed configuration of the connecting member 500, which differs from that of the module housing 2 according to the previously described embodiment of the present disclosure, will be described.

The description of the module housing 2 according to the previously described embodiment of the present disclosure may be applied as is to the remaining configuration of the module housing 2 according to the present embodiment.

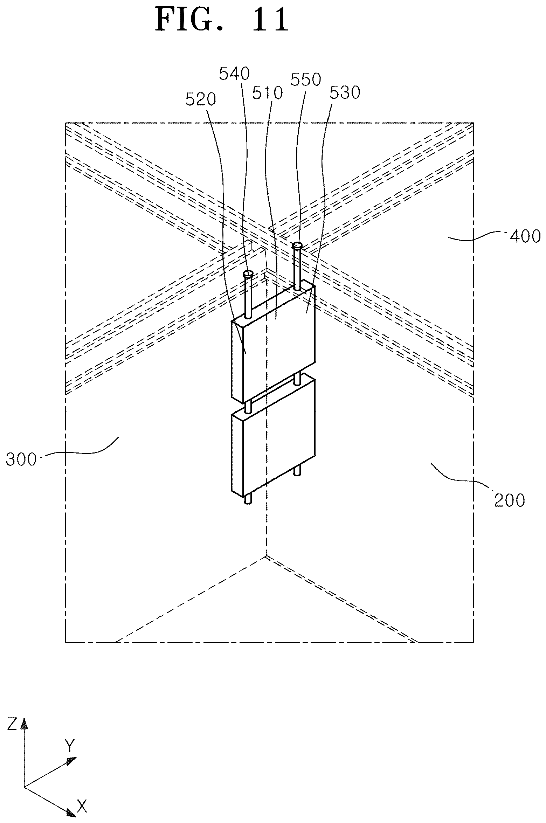

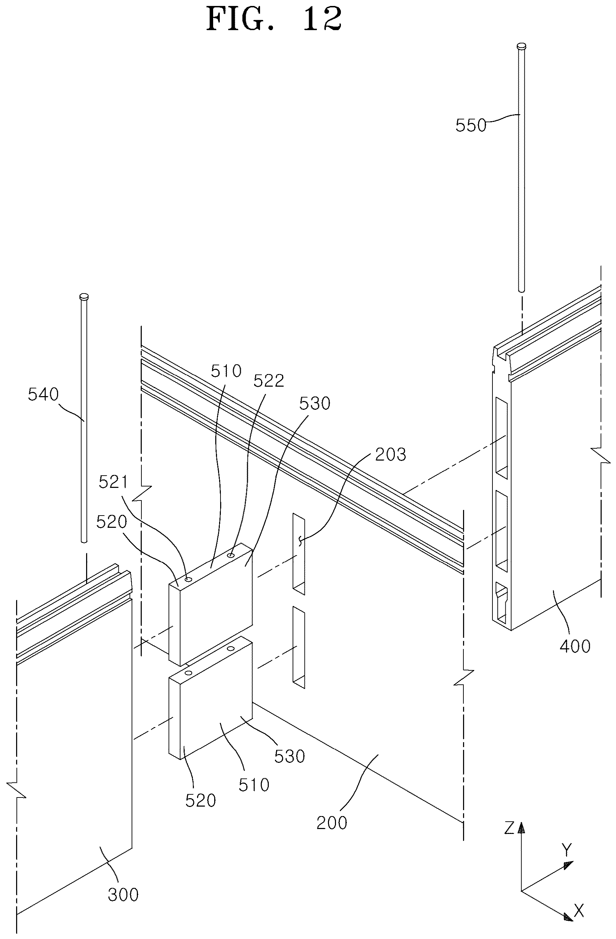

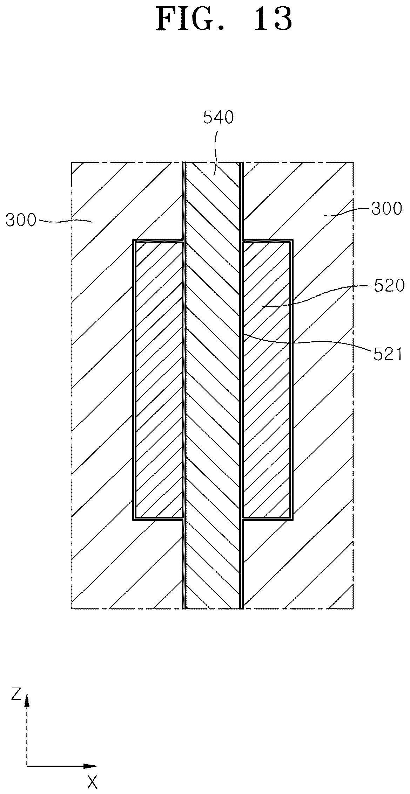

FIG. 11 is a perspective view schematically illustrating a configuration of a connecting member according to another embodiment of the present disclosure; FIG. 12 is an exploded perspective view schematically illustrating a configuration of the connecting member according to another embodiment of the present disclosure; and FIG. 13 is a cross-sectional view schematically illustrating a configuration of the connecting member according to another embodiment of the present disclosure.

Referring to FIGS. 11 to 13, the connecting hole 203 according to the present embodiment may have a rectangular cross-section. Both, or opposite, end portions of the connecting hole 203 may be connected to the second frame hole 302 of the second reinforcement frame 300 and the third frame hole 402 of the third reinforcement frame 400, respectively. In an embodiment, a cross-sectional area of the connecting hole 203 may be the same as the cross-sectional areas of the second frame hole 302 and the third frame hole 402.

The first connecting body 510 according to the present embodiment may have a rectangular cross-section. The first connecting body 510 may be inserted into the connecting hole 203. In an embodiment, the first connecting body 510 may be fixed in the connecting hole 203 by interference fitting, screw fitting, or the like. Both, or opposite, end portions of the first connecting body 510 may protrude outward from the first surface 200a and the second surface 200b of the first reinforcement frame 200, respectively.

The second connecting body 520 according to the present embodiment may extend from an end portion of the first connecting body 510 that protrudes outward from the first surface 200a of the first reinforcement frame 200. In an embodiment, a cross-sectional shape of the second connecting body 520 may be the same as that of the first connecting body 510.

The second connecting body 520 may be inserted into the second frame hole 302 formed in the second reinforcement frame 300. In an embodiment, the second connecting body 520 may be fixed in the second frame hole 302 by interference fitting, screw fitting, or the like.

The third connecting body 530 according to the present embodiment may extend from another end portion of the first connecting body 510 that protrudes outward from the second surface 200b of the first reinforcement frame 200. In an embodiment, a cross-sectional shape of the third connecting body 530 may be the same as that of the first connecting body 510.

The third connecting body 530 may be inserted into the third frame hole 402 formed in the third reinforcement frame 400. In an embodiment, the third connecting body 530 may be fixed in the third frame hole 402 by an interference fitting, screw fitting, or the like.

According to embodiments of the present disclosure, rigidity of a module housing are improved by a first reinforcement frame, a second reinforcement frame, and a third reinforcement frame disposed inside a housing body.

According to embodiments of the present disclosure, relative movement between a first reinforcement frame, a second reinforcement frame, and a third reinforcement frame can be prevented or substantially prevented by a connecting member, and a load applied to the first reinforcement frame, the second reinforcement frame, and the third reinforcement frame can be evenly or substantially evenly distributed, thereby securing structural stability.

However, aspects and effects obtainable through the present disclosure are not limited to the above aspects and effects, and other aspects and technical effects that are not mentioned will be clearly understood by those skilled in the art from the description of the present disclosure.

While the present disclosure has been described with reference to embodiments shown in the drawings, these embodiments are merely illustrative and it is to be understood that various modifications and equivalent other embodiments can be derived by those skilled in the art on the basis of the embodiments.

## Claims

1. A module housing (2) comprising:
a housing body (100);
a first reinforcement frame (200) extending in a first direction inside the housing body (100) and comprising a first surface (200a) and a second surface (200b) that are opposite each other;
a second reinforcement frame (300) facing the first surface (200a) of the first reinforcement frame (200) and extending in a second direction intersecting the first direction;
a third reinforcement frame (400) facing the second surface (200b) of the first reinforcement frame (200) and extending in the second direction; and
a connecting member (500) to connect the first reinforcement frame (200), the second reinforcement frame (300), and the third reinforcement frame (400).

2. The module housing (2) as claimed in claim 1, wherein the connecting member (500) comprises:
a first connecting body (510) passing through the first reinforcement frame (200);
a second connecting body (520) extending from the first connecting body (510) and inserted in the second reinforcement frame (300); and
a third connecting body (530) extending from the first connecting body (510) and inserted in the third reinforcement frame (400).

3. The module housing (2) as claimed in claim 2, wherein the second connecting body (520) and the third connecting body (530) are parallel to the second direction.

4. The module housing (2) as claimed in claim 2, wherein the second connecting body (520) and the third connecting body (530) extend in opposite directions from the first connecting body (510).

5. The module housing (2) as claimed in any one of claims 2 to 4, wherein the connecting member (500) further comprises:
a first connecting pin (540) inserted in the second reinforcement frame (300) and passing through the second connecting body (520); and
a second connecting pin (550) inserted in the third reinforcement frame (400) and passing through the third connecting body (530).

6. The module housing (2) as claimed in claim 5, wherein the first connecting pin (540) and the second connecting pin (550) are parallel to a third direction intersecting the first direction and the second direction.

7. The module housing (2) as claimed in any one of claims 2 to 6, wherein the connecting member (500) further comprises an alignment protrusion (511) protruding from at least one of the first connecting body (510), the second connecting body (520), and the third connecting body (530).

8. The module housing (2) as claimed in claim 1, wherein the housing body (100) comprises:
a bottom plate (110);
a first end plate (120) and a second end plate (130) that extend from the bottom plate (110) and face each other in the second direction; and
a first side plate (140) and a second side plate (150) that extend from the bottom plate (110) and face each other in the first direction.

9. The module housing (2) as claimed in claim 1, further comprising a first fixing member (210) to fix the first reinforcement frame (200) to the housing body (100).

10. The module housing (2) as claimed in claim 9, wherein the first reinforcement frame (200) is seated on the bottom plate (110), and
the first fixing member (210) comprises one or more first bottom fixing pins (211) to fix the first reinforcement frame (200) to the bottom plate (110).

11. The module housing (2) as claimed in claim 10, wherein the first bottom fixing pin (211) comprises:
a first bottom rod (211a) passing through the bottom plate (110) and inserted in the first reinforcement frame (200); and
a first bottom head (211b) connected to the first bottom rod (211a) and in contact with the bottom plate (110).

12. The module housing (2) as claimed in claim 9, further comprising:
a second fixing member (310) to fix the second reinforcement frame (300) to the housing body (100); and
a third fixing member (410) to fix the third reinforcement frame (400) to the housing body (100).

13. The module housing (2) as claimed in claim 12, wherein the second reinforcement frame (300) is seated on the bottom plate (110), and
the second fixing member (310) comprises one or more second bottom fixing pins (311) to fix the second reinforcement frame (300) to the bottom plate (110).

14. The module housing (2) as claimed in claim 13, wherein an end portion of the second reinforcement frame (300) is in contact with the first end plate (120), and
the second fixing member (310) further comprises one or more first end fixing pins (312) to fix the second reinforcement frame (300) to the first end plate (120).

15. A battery module comprising:
a plurality of secondary batteries; and
a module housing (2) accommodating the plurality of secondary batteries,
wherein the module housing (2) comprises:
a housing body (100);
a first reinforcement frame (200) extending in a first direction inside the housing body (100) and comprising a first surface (200a) and a second surface (200b) that are opposite each other;
a second reinforcement frame (300) facing the first surface (200a) of the first reinforcement frame (200) and extending in a second direction intersecting the first direction;
a third reinforcement frame (400) facing the second surface (200b) of the first reinforcement frame (200) and extending in the second direction; and
a connecting member (500) to connect the first reinforcement frame (200), the second reinforcement frame (300), and the third reinforcement frame (400).
